# EUROPEAN PATENT APPLICATION

(11) **EP 1 598 761 A1**
(43) Date of publication of application: **23.11.2005**
(21) Application number: 04713231.1
(22) Date of filing: 20.02.2004
(51) Int. Cl.: G06F 17/60

(54) **WAREHOUSE ACQUISITION SYSTEM**

(30) Priority: 27.02.2003 JP 2003051411
(71) Applicant: HONDA MOTOR CO., Ltd., Tokyo 107-8556 (JP)
(72) Inventor: Tajima, Hisatsugu, c/o Honda Motor Co., Ltd., Tokyo 107-8556 (JP)
(74) Representative: Herzog, Markus
(86) International application number: PCT/JP2004/002008
(87) International publication number: WO 2004/077325

(57) **Abstract**

An offer collecting system for a desired storehouse for keeping products and parts, includes a server connected with a network and having a storage section and a server display unit; a plurality of offerer terminals connected with the network; and an offer collection terminal connected with the server directly or through the network and having a terminal display unit. The offer collection terminal sets first and second collection condition sets in the storage section of the server. The server produces a storehouse offer collection display based on the first collection condition set to provide to the plurality of offerer terminals by displaying the storehouse offer collection display on the server display unit and stores offer data from each of the plurality of offerer terminals in the storage section. Also, the server compares the offer data from each of the plurality of offerer terminals with the second collection condition set, and determines the offer data meeting the second collection condition set as offer data candidates, and outputs the offer data candidates to the offer collection terminal. The offer collection terminal displays the offer data candidates and selects one of the offer data candidates and determines the desired storehouse corresponding to the selected offer data candidate.

## Description

### Technical Field

The present invention relates to a system and a method for collecting offers of storehouses for storing products and parts and determining one of the offers.

### Background Art

Conventionally, when offers of rental storehouses are collected for the storage of products and parts, estimates are collected from rental storehouse companies. A few companies are selected based on the estimates near a collection condition, and a final rental storehouse company is determined through the presentations.

However, in the above offer collecting scheme, the formats of estimates are different every company and it excessively took the time to find where a requested item of the collection condition is written. Also, in the presentation, an essential point of the offer became ambiguous because each offering company emphasizes individual point. As a result, a disadvantage occurred for both of the offering companies and the collecting company.

An open collecting method of a factory is disclosed in Japanese Laid Open Patent Application (JP-P2002-366611A). In this conventional example, predetermined conditions are previously set, and collection is carried out through a network. One of offers that meets all or most of the predetermined conditions is chosen.

However, in case of the collection of a storehouse for storage of products and parts, the collection conditions over a wide range and it is difficult to choose one of the offers which meets all of the conditions. Therefore, it is impossible to collect offers of storehouses through the network in the conventional example.

### Disclosure of Invention

An object of the present invention is to provide a method for collecting offers of storehouses system and a system using the same, in which a storehouse for storage of products and parts can be collected through a network.

Another object of the present invention is to provide a method for collecting offers of storehouses system and a system using the same, in which the offers can be selected automatically based on internal conditions.

Another object of the present invention is to provide a method for collecting offers of storehouses system and a system using the same, in which whether a business relating to the storage of products and parts is possible can be checked.

Another object of the present invention is to provide a method for collecting offers of storehouses system and a system using the same, in which an optimal storehouse can be selected based on numerical data and image data.

In an aspect of the present invention, an offer collecting system for a desired storehouse for keeping products and parts, includes a server connected with a network and a storage section and a server display unit; a plurality of offerer terminals connected with the network; and an offer collection terminal connected with the server directly or through the network and having a terminal display unit. The offer collection terminal sets first and second collection condition sets in the storage section of the server. The server produces a storehouse offer collection display based on the first collection condition set to provide to the plurality of offerer terminals by displaying the storehouse offer collection display on the server display unit and stores offer data from each of the plurality of offerer terminals in the storage section. Also, the server compares the offer data from each of the plurality of offerer terminals with the second collection condition set, and determines the offer data meeting the second collection condition set as offer data candidates, and outputs the offer data candidates to the offer collection terminal. The offer collection terminal displays the offer data candidates and selects one of the offer data candidates and determines the desired storehouse for keeping the products and parts corresponding to the selected offer data candidate.

Here, the offer data may include numerical data and image data. In this case, the server may output the offer data candidates to the offer collection terminal such that the numerical data of each of the offer data candidates is displayed on the terminal display unit in a list form and the image data of each of the offer data candidates is displayed as an image on the terminal display unit.

Also, the storehouse offer collection display may contain a plurality of input screens to input data for different items of the first collection condition set.

Also, the first collection condition set may include whether an offer of each of the plurality of offer terminals can provide a distribution service. In this case, the offer collecting system may further include a distribution center terminal associated with the selected offer data candidate and connected with the network. The offer collection terminal orders transportation of the products and parts to the determined storehouse to the distribution center terminal, and the products and parts are transported by a truck to the determined storehouse based on an instruction from the distribution center terminal.

Also, the offer collection terminal may change the second collection condition set, and the server carries out the comparison, the determination and the output of the offer data candidates once again based on the changed second collection condition set.

Also, the server may transmit an offer reception notice to the offer collection terminal in response to the determination of the offer data candidate, and the offer collection terminal may issue an output instruction in response to the offer reception notice. At this time, the server outputs the offer data candidates to the offer collection terminal in response to the output instruction from the offer collection terminal.

In another aspect of the present invention, a software product readable by a computer to execute processing may include a function of providing a storehouse collection display based on a first collection condition set from an offer collection terminal; a function of receiving offer data and storing in a database; a function of comparing the offer data with a second collection condition set, when the offer data is received from each of a plurality of offerer terminals; a function of determining the offer data meeting the second collection condition set as an offer data candidate; and a function of outputting the offer data candidates to the offer collection terminal. Thereby, one of the offer data candidates is selected as a selected storehouse by the offer collection terminal.

Here, the offer data may include numerical data and image data. In this case, the function of outputting may include outputting the offer data candidates to the offer collection terminal such that the numerical data of the offer data candidates are displayed on the offer collection terminal in a list form and the image data of a selected one of the offer data candidates is displayed on the offer collection terminal.

Also, the software product may further include a function of transmitting an offer notice to the offer collection terminal in response to the determination of the offer data candidates. In this case, the first collection condition set may include whether an offer of each of the plurality of offer terminals can provide a distribution service.

### Brief Description of Drawings

Fig. 1 is a block diagram showing the structure of a storehouse offer collecting system of the present invention;
Fig. 2 is a diagram showing the structure of a server and a collection terminal in the storehouse offer collecting system of the present invention in detail;
Fig. 3 is a flow chart showing a flow from a storehouse collection start to a check start of the application in the storehouse offer collecting system of the present invention;
Figs. 4A to 4F are diagrams showing first to eighth collection screens in the storehouse offer collecting system of the present invention;
Figs. 5A and 5B are diagrams showing output screens in the storehouse offer collecting system of the present invention;
Fig. 6 is a diagram showing storehouse data stored in a data base of the server; and
Fig. 7 is a diagram showing reference data stored in a database of the server.

### Best Mode for Carrying Out the Invention

Hereinafter, a storehouse offer collecting system of the present invention will be described in detail with reference to the attached drawings.

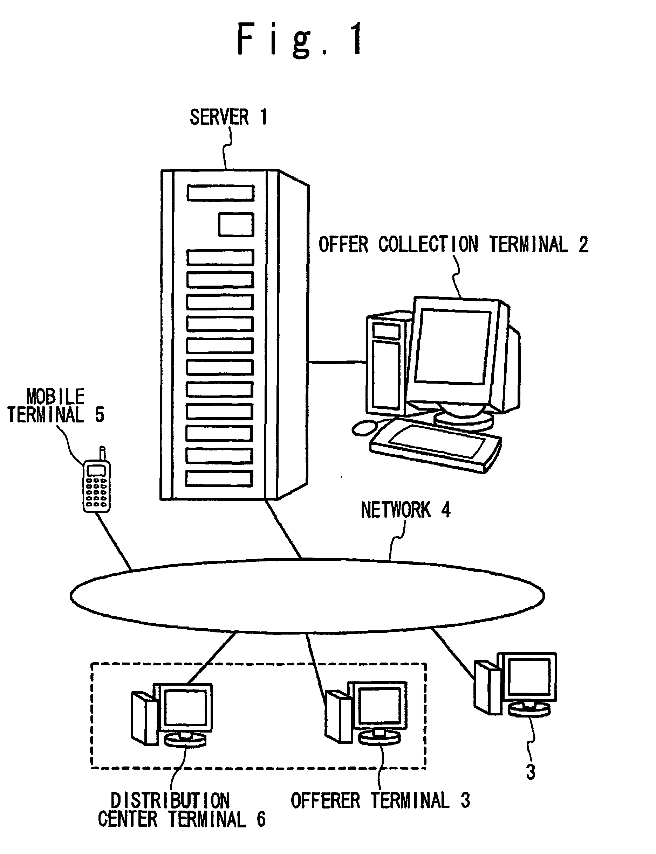

Fig. 1 is a block diagram showing the configuration of the storehouse offer collecting system according to an embodiment of the present invention. Referring to Fig. 1, the storehouse offer collecting system in this embodiment is composed of a server 1, an offer collection terminal 2, offerer terminals 3, a mobile terminal 5, and a distribution center terminal 6 associated with an offerer, and they are connected by a network 4 such as the Internet.

The offer collection terminal 2 is an information terminal like a personal computer which is connected with the server 1 directly or through the network 4. The offer collection terminal 2 can communicate with the server 1 to set reference data to the server 1 and to issue various instructions to the server 1. The offer collection terminal 2 has a display unit (not shown) and displays storehouse data outputted from the server 1 on the display unit when receiving an offer notice using an E-mail from the server 1.

Each offerer terminal 3 is an information terminal like a personal computer. The offerer terminal 3 has a display unit (not shown) and accesses a collection Web page of the server 1 through the network 4 and displays it on the display unit.

The mobile terminal 5 receives the offer notice transmitted from the server 1 when the offer collection terminal 2 is not available, and displays the storehouse data outputted from the server 1.

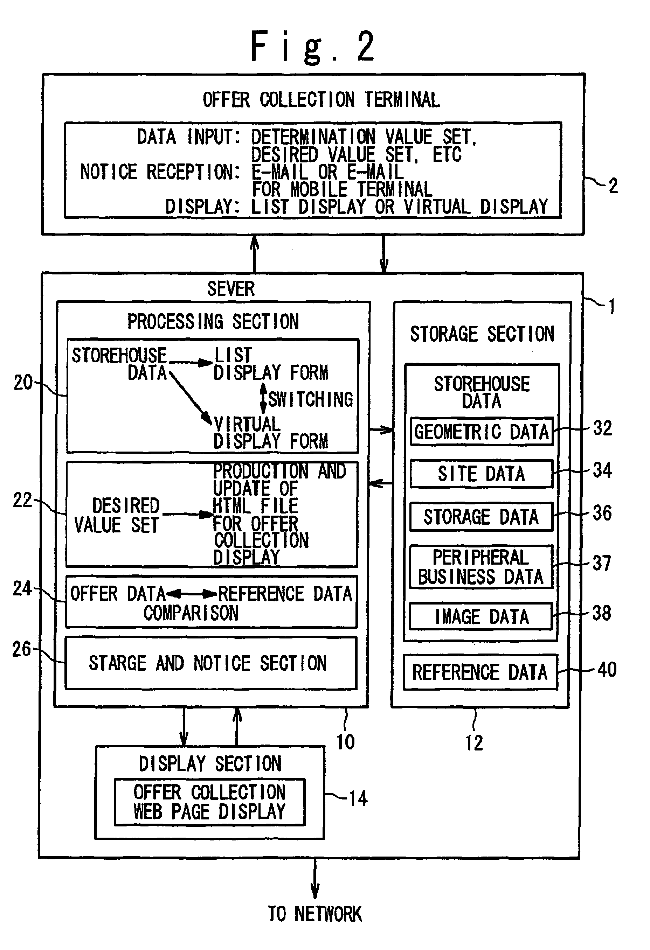

The server 1 is an information terminal like a personal computer or the like. Referring to Fig. 2, the server 1 is composed of a processing section 10, a storage section 12 and a display section 14. The storage section 12 has a storehouse database which stores offer data and a reference database which stores reference data.

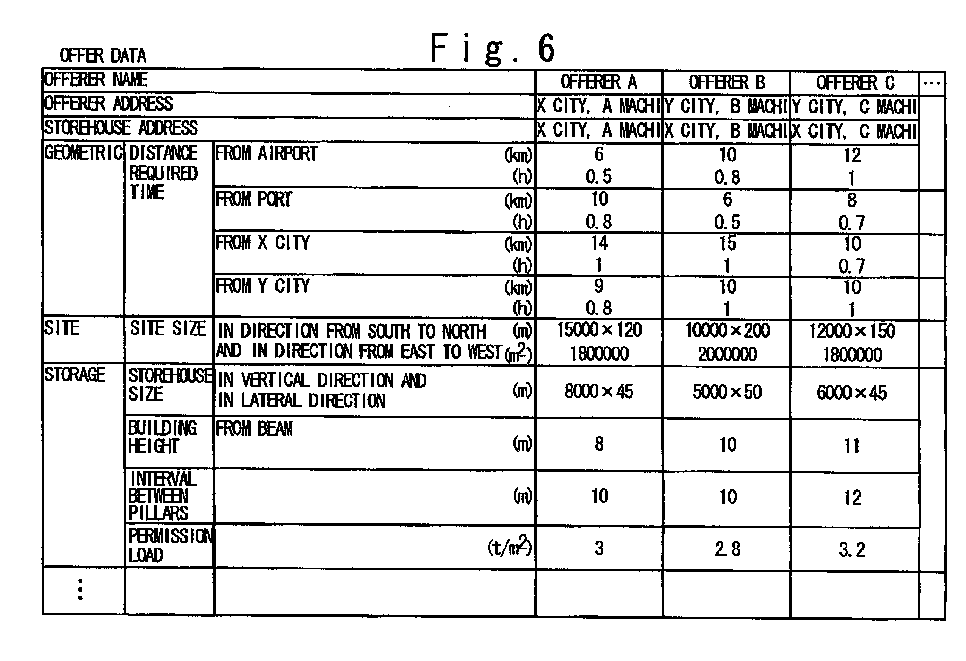

The storehouse database stores offer data offered through the network 4 every offerer. In detail, referring to Fig. 6, the offer data contains items of a name and address of the offerer and a location of the storehouse and storehouse data 30. Also, the storehouse data 30 contains geographical data 32, site data 34, storage data 36 and surrounding business data 37. These data are stored separately but are linked to the offerer. Moreover, the storehouse data 30 contains image data 38 of the storehouse.

The geographical data 32 contains a distance and a required time from an airport to a storehouse of the offerer, a distance and a required time from a port to the storehouse of the offerer, a distance and a required time from a specific point in X city to the storehouse, and a distance and a required time from a specific point in Y city to the storehouse. The site data 34 contains the size of the site of the rental storehouse of the offerer. The storage data 36 contains items of the size and building height of the storehouse, the interval between pillars and a permission load. The surrounding business data 37 contains data indicative of whether the offerer can carry out distribution business of products or parts to be stored in the storehouse.

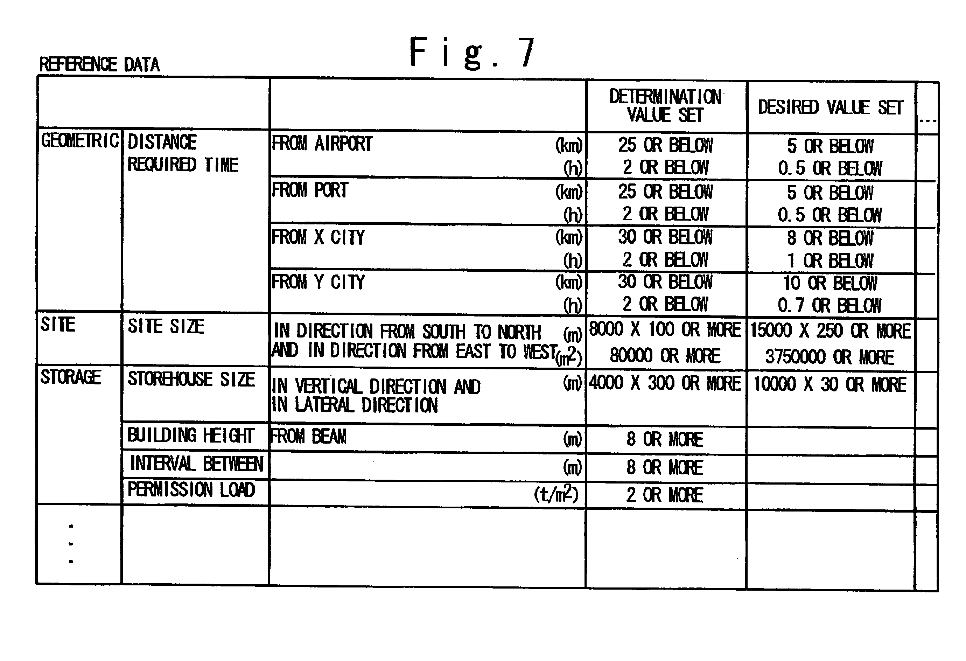

Referring to Fig. 7, the reference data contains a determination value set and a desired value set to the same items as those of the storehouse data. The determination value set and the desired value set are set from the offer collection terminal 2 by a collector. The desired value set is used to provide a hope of the collector. By setting the desired value set, it is possible to simply determine whether the site of the storehouse and the capacity of the storehouse are smaller or larger than a desired site and a desired capacity. The determination value set is compared with the offer data to determine the offer data. The offer data which does not meet the determination value set can be automatically removed from an offer data candidate. The determination value set does not necessarily be set. When the determination value set is not set, all the offer data are selected as the offer data candidates.

Also, the collector only shows the desired value set and can carry out collection of the offers without exhibiting the determination value set. The optional change of the determination value set and the desired value set is possible and the collector can limit the candidates from the offer data by changing the determination value set and the desired value set.

The processing section 10 of the server 1 has an output processing section 20, a Web page generating and updating section 22, a determination section 24 and a storage and notice section 26. The Web page generating and updating section 22 reads the reference data 40 from the storage section 12 and generates a Web page with a HTML file format to be exhibited onto the Internet automatically based on the desired value set of the read reference data.

The storage and notice section 26 stores the offer data from each of the offer terminals 3 in the storehouse database of the storage section 12 when someone offers a storehouse to the collection for the storehouse, and notifies reception of the offer to the offer collection terminal 2.

The determination section 24 reads the offer data containing the storehouse data every offerer from the storehouse database and the reference data from the reference database, compares the read storehouse data and the determination value set of the reference data. When the storehouse data is determined to be not contained in a range set based on the determination value set of the reference data, the offer data is determined to be not a candidate. The offer data determined to be not the candidate is stored as mere storehouse data.

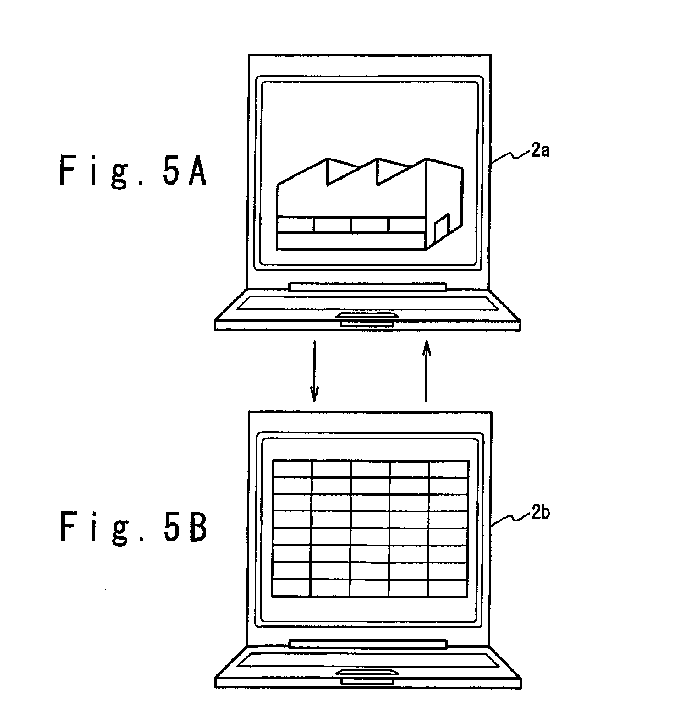

The output processing section 20 selects one of the output forms of the storehouse data in response to a form selection instruction from the terminal 2 and outputs the storehouse data in the selected form to the offer collection terminal 2. Also, the output processing section 20 displays the offer data on the display section 14 in a list form or an image form, in the same way. As shown in Figs. 5A and 5B, numerical data such as the geographical data, the site data, the storage storehouse data of the storehouse data 30 are displayed in the list form on the display section 14 and the image data 38 is displayed as a virtual image. The list form and the virtual form can be switched mutually.

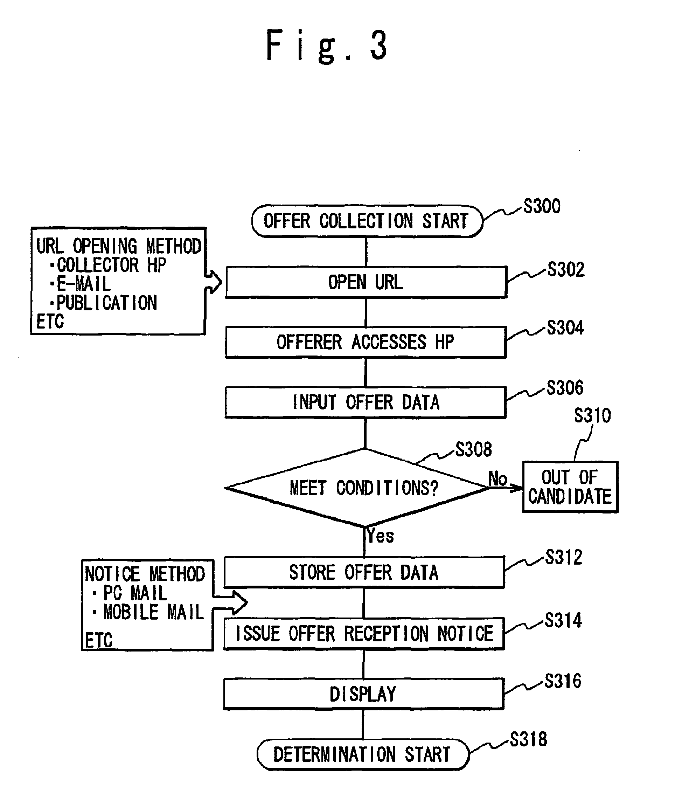

Next, an operation of the storehouse offer collecting system according to the embodiment of the present invention will be described. At the step S300 of Fig. 3, the storehouse collector determines the desired value set as collection conditions of the rental storehouse using the offer collection terminal 2 when the storehouse is required newly with the change of the business contents and so on. Also, the collector determines the determination value set. Then, the desired value set and the determination value set are set in the storage section 12. Thereafter, a page generation instruction is issued from the offer collection terminal 2 by the collector. The Web page generating and updating process section 22 generates a Web page for the collection of a storehouse in response to the page generation instruction and provide it on the Internet. In this way, the collection is started. The input items requested from the collector are described on the first page of the storehouse collection Web page.

At the step S302, URL of the Web page for the storehouse collection is provided on a home page on the Internet managed by the collector or is informed to offerers relating the collection through publications. Also, the offer collection terminal 2 uses an E-mail to notify it directly to the offerers whose addresses are known.

At the step S304, when viewing the URL or receiving a notice by the E-mail, each of the offerers accesses the Web page for the storehouse collection. The offerer can prepare the storehouse data previously by referring to the first page of the Web page for the storehouse collection. Also, the offer data to be inputted on the collection Web page contains the geographical data 32, the site data 34, the storage storehouse data 36, the surrounding business data 37 and the image data 38 showing the outward appearance of the storehouse. Since the input items requested from the collector are described on the first page of the collection Web page, the confusion of the offerer can be prevented.

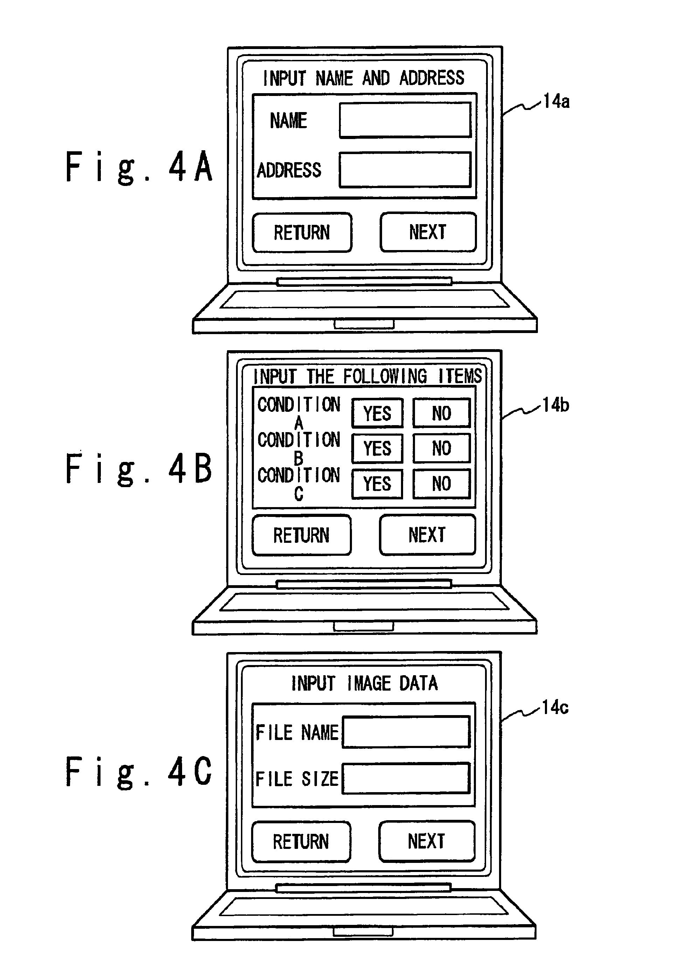

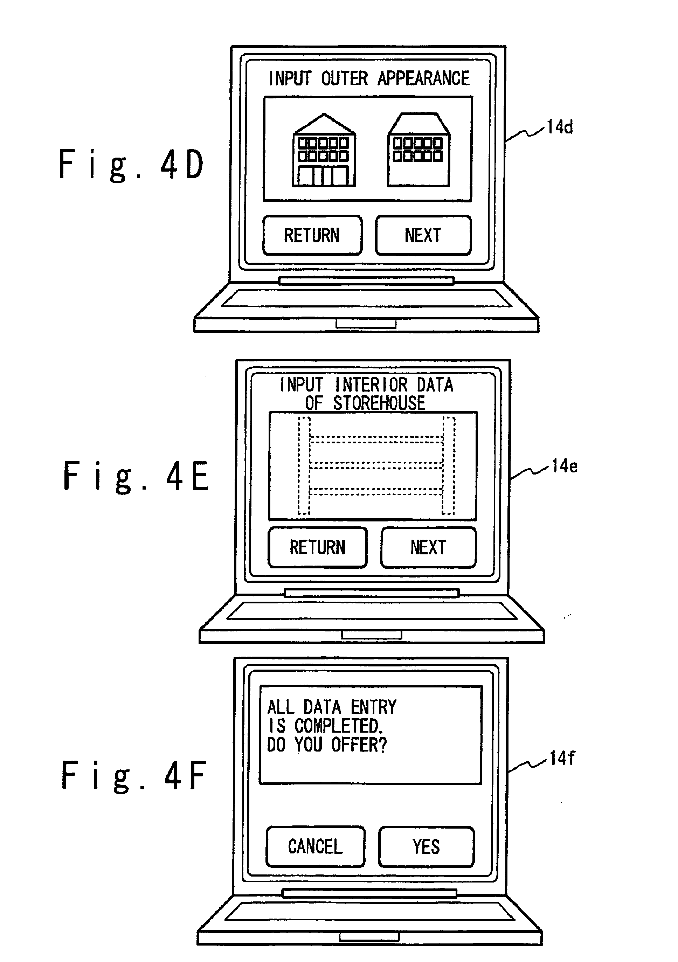

At the step S306, the offerer inputs the requested offer data in accordance with the guidance of the screens. For example, as shown in Fig. 4A, a name and address of the offerer are requested firstly. Then, the offer data are requested in accordance with the items corresponding to the desired value set, as shown in Fig. 4B. Subsequently, a file name and size of image data of the storehouse are requested, as shown in Fig. 4C, and the image data is inputted, as shown in Fig. 4D. Then, data indicative of the inside of the storehouse is requested, as shown in Fig. 4E. Thereafter, when the whole of the data is inputted, the offer is ended, as shown in Fig. 4F. In this way, the input screens are different for each group of items and the whole storehouse data can be inputted on the Web page in accordance with the guidance. In case of input of the offer data on the screen, it is not possible to proceed to the next screen if the offerer does not input the data which is indispensable to the collector. Thus, the lack of the necessary information is prevented. Also, as shown in Figs. 4D, 4E, because the building size is inputted using the image data displayed on the screen, it is possible to prevent an input mistake. Moreover, when the collection is carried out in an area where the different language is used, the input mistake based on the linguistic difference can be prevented. If all the input items are filled, the inputted offer data is transmitted to the server 1.

At the step S308, the offer data transmitted from the offerer terminal 3 to the server 1 is stored in the storage section 12 for every offerer. After that, the determination section 24 reads out the determination value set of the reference data 40 and the storehouse data 30 for every offerer from the storage section 12 and compares with them each other. The determination section 24 determines whether the storehouse data is inside the range of the determination value set of the reference data.

At the step 310, when the storehouse data is determined to be outside the range, the determination section 24 determines that the storehouse data is not a candidate. In this case, the storage section 26 stores the offer data containing the storehouse data as usual storehouse data in the storage section 12 separately from the storehouse data candidate.

At the step S312, when the storehouse data is inside the range of the determination value set of the reference data, the determination section 24 determines that the storehouse data is a candidate. The offer data candidate is stored in a candidate area of the storage section 12.

At the step S314, when the storehouse data is determined to be inside of the range by the determination section 24, the notice section 26 issues a notice to the offer collection terminal 2 to show the reception of a new offer.

At the step S316, the offer collection terminal 2 accesses the server 1 in response to the notice and transmits an output instruction to the server 1. The server 1 transmits the offer data containing the storehouse data in the list form or the image form to the offer collection terminal 2 in response to the output instruction. Thus, the offer data is displayed on the display unit of the offer collection terminal 2. As shown in Figs. 5A and 5B, the display form can be selected between the list form and the image form. When the display form is switched, the output instruction is transmitted from the offer collection terminal 2 to the server 1. Also, the offer data may be displayed individually. In this case, when the collector wants to view another offer data, a next offer data instruction is transmitted from the offer collection terminal 2 to the server 1. Thus, the next offer data candidate is displayed on the display unit of the offer collection terminal 2. In this way, the collector can select one of the offer data candidates which meets the determination value set as the requested conditions or is the nearest to the request conditions while switching the display forms of the offer data candidates.

When all the offer data do not meet the requested conditions, the collection is continued. Alternately, the collector may change the determination value set of the reference data using the offer collection terminal 2. The changed determination value set is written in the reference data 40 of the storage section 12 of the server 1. When the change of the determination value set is carried out, the determination section 24 refers to the offer data once again and carries out the determining process of the step S308. Thus, when any storehouse data is inside the new range of the determination value set, the offer data is displayed on the offer collection terminal 2. By repeating this operation, the time of the wasteful reconsideration can be omitted.

When the offerer corresponding to one selected from among the offer data candidates can carry out the distribution business, the collector orders the transportation of products or parts to the distribution center terminal 6 associated with the offerer. Thus, the products or parts can be transported from or to the selected storehouse by a truck.

As described above, according to the present invention, the storehouse data can be automatically determined by collecting the offers of the storehouse for storing products on the network and the offer which does not satisfy the requested conditions can be automatically determined and a wasteful negotiation time, efforts and costs can be largely reduced.

Also, an output form is unified, so that the comparison examination becomes easy, so that the wasteful time and efforts can be largely reduced.

Also, since an input screen using an image is provided for the input form, an input mistake can be prevented.

Also, since a specified input data is inputted as an image data, the information about the outward appearance of the storehouse which can not be grasped from the numerical data and the information about the industrial environment around the candidates can be confirmed.

Also, since the requested conditions contains data indicative of whether the offerer can carry out the distribution business, the offer is not necessary to collect the entrusting trader who carries out distribution business, so that the negotiation time, efforts and costs can be largely reduced.

## Claims

1. An offer collecting system for a desired storehouse for keeping products and parts, comprising:
a server connected with a network and having a storage section and a server display unit;
a plurality of offerer terminals connected with said network; and
an offer collection terminal connected with said server directly or through said network and having a terminal display unit,
wherein said offer collection terminal sets first and second collection condition sets in said storage section of said server,
said server produces a storehouse offer collection display based on said first collection condition set to provide to said plurality of offerer terminals by displaying said storehouse offer collection display on said server display unit and stores offer data from each of said plurality of offerer terminals in said storage section,
said server compares said offer data from each of said plurality of offerer terminals with said second collection condition set, and determines said offer data meeting said second collection condition set as offer data candidates, and outputs said offer data candidates to said offer collection terminal, and
said offer collection terminal displays said offer data candidates and selects one of said offer data candidates and determines said desired storehouse corresponding to the selected offer data candidate.

2. The offer collecting system according to claim 1, wherein said offer data includes numerical data and image data.

3. The offer collecting system according to claim 2, wherein said server outputs said offer data candidates to said offer collection terminal such that said numerical data of each of said offer data candidates is displayed on said terminal display unit in a list form and said image data of each of said offer data candidates is displayed as an image on said terminal display unit.

4. The offer collecting system according to any of claims 1 to 3, wherein said storehouse offer collection display contains a plurality of input screens to input data for different items of said first collection condition set.

5. The offer collecting system according to any of claims 1 to 4, wherein said first collection condition set includes whether an offerer of each of said plurality of offerer terminals can provide a distribution service.

6. The offer collecting system according to claim 5, further comprising:
a distribution center terminal associated with the selected offer data candidate and connected with said network,
wherein said offer collection terminal orders transportation of said products and parts to said determined storehouse to said distribution center terminal, and
said products and parts are transported by a truck to said determined storehouse based on an instruction from said distribution center terminal.

7. The offer collecting system according to any of claims 1 to 6, wherein said offer collection terminal changes said second collection condition set, and
said server carries out the comparison, the determination and the output of said offer data candidates once again based on the changed second collection condition set.

8. The offer collecting system according to any of claims 1 to 6, wherein said server transmits an offer reception notice to said offer collection terminal in response to said determination of said offer data candidates, and
said offer collection terminal issues an output instruction in response to said offer reception notice, and
said server outputs said offer data candidates to said offer collection terminal in response to said output instruction from said offer collection terminal.
